# EUROPEAN PATENT APPLICATION

(11) **EP 3 226 144 A1**
(43) Date of publication of application: **04.10.2017**
(21) Application number: 15862850.3
(22) Date of filing: 16.04.2015
(51) Int. Cl.: G06F 13/00

(54) **SERIAL DATA SENDING AND RECEIVING METHODS AND APPARATUSES, AND STORAGE MEDIUM**

(30) Priority: 24.11.2014 CN 201410683213
(71) Applicant: ZTE Corporation, Shenzhen, Guangdong 518057 (CN)
(72) Inventor: XIE, Xiaolong, Shenzhen Guangdong 518057 (CN); YANG, Minhua, Shenzhen Guangdong 518057 (CN); SONG, Junhui, Shenzhen Guangdong 518057 (CN); LIU, Mingqiang, Shenzhen Guangdong 518057 (CN)
(74) Representative: Studio Torta S.p.A.
(86) International application number: PCT/CN2015/076805
(87) International publication number: WO 2016/082434

(57) **Abstract**

Disclosed are a high-speed serial data sending and receiving methods and apparatuses, and a storage medium. The serial data receiving method comprises: coding a to-be-sent data flow and encapsulating the coded data flow into MAC data frames, wherein each MAC data frame comprises a start identifier portion and a to-be-sent data portion; and sending the coded MAC data frames through a physical port, and forming a frame pitch after each sent MAC data frame, so that the currently sent MAC data frame and a next to-be-sent MAC data frame are separated by set threshold bits.

## Description

### TECHNICAL FIELD

The present disclosure relates to a data transmission technique for a high-speed serial interconnection interface between chips, and more particularly, to a method and device for transmitting serial data, a method and device for receiving serial data, and a storage medium.

### BACKGROUND

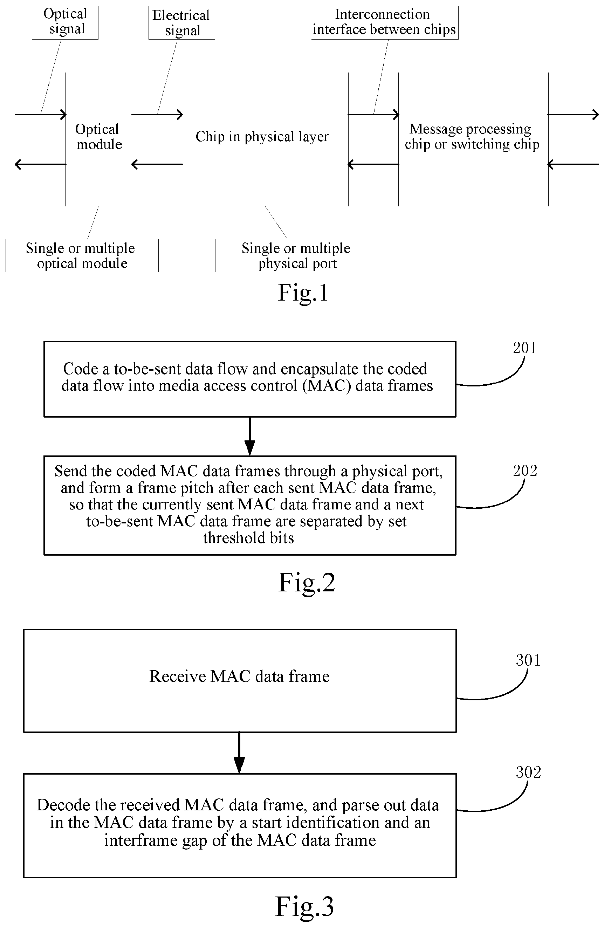

In data communication, a high-speed serial interface is needed for achieving inter-chip interconnection, as shown in Fig. 1; for data packet interconnection interface above 10G, generally interface protocols, such as 10G XFI/SFI, Higig or Interlaken, are adopted. 10G XFI/SFI is only used for single-port framer transmission, uses a standard MAC frame format, and can support 10G LAN/WAN bandwidth requirements. However, because 10G XFI/SFI only supports the standard MAC frame format, it cannot achieve multi-port or multi-service processing. HiGig is an interface protocol developed by Broadcom company, uses an improved MAC frame format, and supports channelization by reducing preamble (Preamble) and Interframe Gap (IPG) and adding a framer header. However, because IEEE 802.3 protocol requires a minimum support of 8 bytes of IPG, there is a high IPG, resulting in wasted bandwidth. Interlaken supports channelization, cuts framers into burst data (Burst Data) for transmission, and separates the burst data by inserting burst control words (Burst Control Word). Because the burst control words are data of 64 bits wide, after a certain number of burst data is sent (in the protocol, which is defined as Burst_Max length), or when switching to a different transmission channel, it is needed to insert at least one burst control word of 64 bits wide, thereby an overall efficiency of Interlaken is not high.

### SUMMARY

In order to solve the above-mentioned technical problems, embodiments of the present disclosure provides a method and device for transmitting serial data, a method and device for receiving serial data, and a storage medium, which are capable of realizing high-efficiency and multi-channel serial data transmission.

The technical solutions of the embodiments of the present disclosure are realized as follows:
A method for transmitting serial data includes:
   encoding data stream to be transmitted into a media access control MAC data frame;
   the MAC data frame including a start identification portion and a to-be-transmitted data portion; and
   transmitting the encoded MAC data frame via a physical port and forming an interframe gap after each of the transmitted MAC data frames so that the currently transmitted MAC data frame is spaced from a next MAC data frame to be transmitted by a set threshold bit.

As one implementing manner, the MAC data frame further includes: a preamble portion, and/or a framer header portion, and/or a frame check sequence portion.

As one implementing manner, a bit length of the start identification portion is 1 to 8 bytes; and when the bit length of the start identification portion is 2 or more, the start identification portion includes the preamble portion.

As one implementing manner, the framer header portion includes at least one information of a channel number, a priority, a protocol type, an operation type, flow table information, and an in-band flow control of a framer; and
the frame check sequence portion has a bit length of 1 to 4 bytes.

As one implementing manner, the interframe gap is from 1 to 7 bytes at line speed.

As one implementing manner, an encoding mode for encoding the data stream to be transmitted is 64B/66B encoding mode; and
when the interframe gap is 1 to 4 bytes, three groups of control block codes are added into the 64B/66B encoding mode:
T0 C1 C2 C3/S4 D5 D6 D7;
D0 T1 C2 C3/S4 D5 D6 D7; and
D0 D1 T2 C3/S4 D5 D6 D7.

As one implementing manner, the method further includes:
when the transmitted MAC data frames are two or more, further inserting an alignment marker in the interframe gap, then the different MAC data frames are distinguished by the alignment marker.

A method for receiving serial data includes:
after receiving a MAC data frame, decoding the received MAC data frame, and parsing out data in the MAC data frame by a start identification and an interframe gap of the MAC data frame.

As one implementing manner, the method further includes:
when the received MAC data frame is two or more, identifying different MAC data frames by an alignment marker between the MAC data frames.

A device for transmitting serial data includes: an encoding unit and a transmission unit, wherein:
the encoding unit is configured to encode data stream to be transmitted into a media access control MAC data frame; the MAC data frame including a start identification portion and a to-be-transmitted data portion; and
the transmission unit is configured to transmit the encoded MAC data frame via a physical port and form an interframe gap after each of the transmitted MAC data frames so that the currently transmitted MAC data frame is spaced from a next MAC data frame to be transmitted by a set threshold bit.

As one implementing manner, the MAC data frame further includes: a preamble portion, and/or a framer header portion, and/or a frame check sequence portion; and a bit length of the start identification portion is 1 to 8 bytes; and when the bit length of the start identification portion is 2 or more, the start identification portion includes the preamble portion.

As one implementing manner, the framer header portion includes at least one information of a channel number, a priority, a protocol type, an operation type, flow table information, and an in-band flow control of a framer; and
the frame check sequence portion has a bit length of 1 to 4 bytes.

As one implementing manner, an encoding mode for encoding the data stream to be transmitted is 64B/66B encoding mode; and
when the interframe gap is 1 to 4 bytes, three groups of control block codes are added into the 64B/66B encoding mode:
T0 C1 C2 C3 /S4 D5 D6 D7;
D0 T1 C2 C3/S4 D5 D6 D7; and
D0 D1 T2 C3/S4 D5 D6 D7.

As one implementing manner, the transmission unit is further configured to, when the serial channels for transmitting the data stream are two or more, insert an alignment marker in the interframe gap, then different serial channels are distinguished by the alignment marker.

A device for receiving serial data includes: a receiving unit and a decoding unit, wherein:
the receiving unit is configured to receive a MAC data frame; and
the decoding unit is configured to decode the received MAC data frame, and parse out data in the MAC data frame by a start identification and an interframe gap of the MAC data frame.

As one implementing manner, the receiving unit is further configured to, when serial channels for receiving the data are two or more, identify MAC data frames in different serial channels by an alignment marker between the MAC data frames.

A storage medium stores computer program that is configured to perform the above method for transmitting high-speed serial data.

A storage medium stores computer program that is configured to perform the above method for receiving serial data.

In the embodiments of the present disclosure, the MAC data frame is modified so that it only carries the start identification information and the data to be transmitted, which greatly increases the ability of the MAC data frame to carry valid data, and by modifying the 64B/66B encoding mode such that the interframe gap can reach 1 byte, the overhead during the data transmission process is minimized, the transmission efficiency is improved, and the number of serial channels is reduced. The technical solution of the embodiments of the present disclosure can be flexibly applied to the transmission interface of various chip interconnection because it can support the configuration of multiple rates and multiple serial channels.

### BRIEF DESCRIPTION OF THE DRAWINGS

Fig. 1 is a schematic diagram illustrating an inter-chip interconnection achieved by a serial interface;
Fig. 2 is a flow chart of a method for transmitting serial data according to an embodiment of the present disclosure;
Fig. 3 is a flow chart of a method for receiving serial data according to an embodiment of the present disclosure;
Fig. 4 is a schematic diagram of a data packet transmission according to an embodiment of the present disclosure;
Fig. 5 is a schematic diagram of a MAC data packet structure according to an embodiment of the present disclosure;
Fig. 6 is a schematic diagram of a standard 64B/66B code table;
Fig. 7 is a schematic diagram of newly added three groups of 64B/66B control block code according to an embodiment of the present disclosure;
Fig. 8 is a schematic diagram of an alignment marker format according to an embodiment of the present disclosure;
Fig. 9 is a schematic diagram showing a structure of a device for transmitting serial data according to an embodiment of the present disclosure; and
Fig. 10 is a schematic diagram showing a structure of a device for receiving serial data according to an embodiment of the present disclosure.

### DETAILED DESCRIPTION

In order to make the objects, technical solutions and advantages of the present disclosure more clear, embodiments of the present disclosure will be described in detail hereinafter with reference to the accompanying drawings. It is to be noted that the embodiments in the present application and the features in the embodiments may be combined with each other without conflict.

Fig. 2 is a flow chart of a method for transmitting serial data according to an embodiment of the present disclosure. As shown in Fig. 2, the method for transmitting serial data according to an embodiment of the present disclosure includes the following steps.

In step 201, data stream to be transmitted is encoded and packed into a media access control MAC data frame.

In the embodiments of the present disclosure, it is necessary to modify the existing MAC data frame so as to carry only a small amount of control information, such that the MAC data frame carries more valid data. The MAC data frame may include only a start identification portion and a to-be-transmitted data portion.

As an implementation manner, the MAC data frame may further include: a preamble (Preamble) portion, and/or a framer header (Header) portion, and/or a frame check sequence (FCS, Frame Check Sequence) portion.

In the embodiments of the present disclosure, a bit length of the start identification portion is 1 to 8 bytes; and when the bit length of the start identification portion is 2 or more, the start identification portion includes the preamble portion.

In the embodiments of the present disclosure, when the MAC data frame further includes the framer header (Header) portion, the framer header portion may include at least one information of a channel number, a priority, a protocol type, an operation type, flow table information, and an in-band flow control.

When the MAC data frame further includes the frame check sequence FCS portion, the frame check sequence portion has a bit length of 1 to 4 bytes.

In step 202, the encoded MAC data frame is transmitted via a physical port and an interframe gap is formed after each of the transmitted MAC data frames so that the currently transmitted MAC data frame is separated from a next MAC data frame to be transmitted by a set threshold bit.

In the embodiments of the present disclosure, when two or more MAC data frames are transmitted, an alignment marker (Alignment Marker) is inserted into the interframe gap, and the previous and the later MAC data frames are distinguished by the alignment marker.

In the embodiments of the present disclosure, the interframe gap is 1 to 7 bytes at line speed.

In the embodiments of the present disclosure, an encoding method for encoding the data stream to be transmitted is 64B/66B encoding mode; and when the interframe gap is 1 to 4 bytes, the following three groups of control block codes are added in the 64B/66B encoding mode:
T0 C1 C2 C3/S4 D5 D6 D7;
D0 T1 C2 C3/S4 D5 D6 D7; and
D0 D1 T2 C3/S4 D5 D6 D7.

In the embodiments of the present disclosure, through the 64B/66B encoding, IPG is reduced to an average of 8 bytes with a variation range of 5 to 11 bytes. Through the addition of the above three groups of 64B/66B codes, IPG can be reduced to an average of 4 bytes with the variation range of 1-7 bytes.

Fig. 3 is a flow chart of a method for receiving serial data according to an embodiment of the present disclosure. As shown in Fig. 3, the method for receiving serial data according to an embodiment of the present disclosure includes the following steps.

In step 301, a MAC data frame is received.

The MAC data frames sent by other chips are received through a physical serial interface.

In step 302, the received MAC data frame is decoded, and data in the MAC data frame is parsed out by a start identification and an interframe gap of the MAC data frame. Corresponding to the encoding method of 64B/66B encoding mode in the data transmission method as described above, in the embodiments of the present disclosure, the decoding method is 64B/66B decoding mode. And when the received MAC data is two or more, different MAC data frames are identified by an alignment marker between the MAC data frames.

When the MAC data frame carries other control information portion, a corresponding decoding process is required. Since the decoding process and the aforementioned encoding process are reverse to each other, the details of the decoding are not repeated here.

The essence of the technical solutions of the embodiments of the present disclosure is further illustrated by the following specific examples.

The technical solutions of the embodiments of the present disclosure have the following characteristics.

In the link layer, through the customized additional information format, it is possible to support channelized framer transmission and specific information transmission, such as a priority, a protocol type, an operation type and flow table information of a framer. The data is transmitted in a whole packet, which reduces the packing process brought out by packet fragmentation, and simplifies the design.

In the physical layer, based on the modified 64B/66B encoding mode, a 4-byte average interframe gap is achieved, which improves the transmission efficiency.

Flexible bandwidth support is achieved, and configuration of multiple serial channel rates and multiple serial channels can be supported. In the design of multiple serial channels, a multi-channel alignment and a channel error status monitoring are achieved by periodically inserting alignment markers.

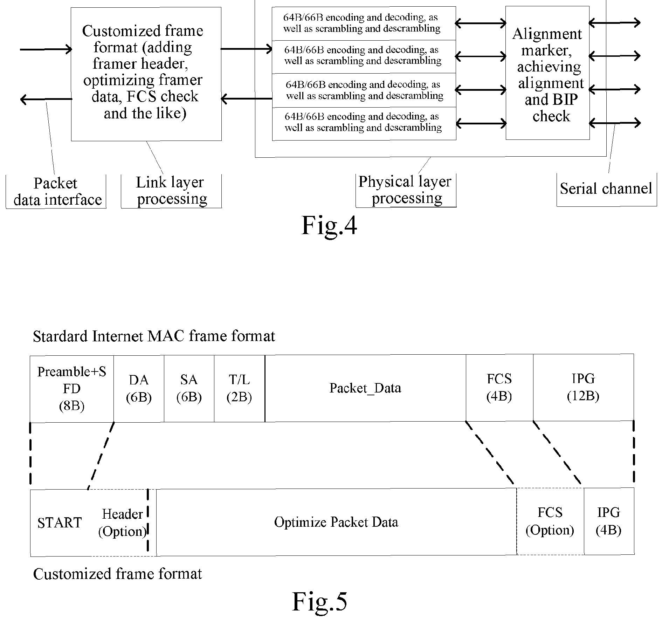

Fig. 4 is a schematic diagram of a data packet transmission according to an embodiment of the present disclosure. As shown in Fig. 4, the embodiments of the present disclosure are mainly implemented at the link layer and the physical layer. The customized framer format is realized at the link layer based on the MAC frame format of Ethernet. At the physical layer, encoding and decoding, as well as scrambling and descrambling are implemented based on 64B/66B of Ethernet, and the 64B/66B codecs are modified to support a relatively small IPG. At the physical layer, a multi-channel alignment mechanism and a channel signal status monitoring are achieved through periodic insertion of the alignment markers.

Through the above mechanism, with respect to interfaces such as 10G XFI/SFI, HiGig and Interlaken, the technical schemes of the embodiments of the present disclosure optimize the frame format, and support a large number of customized functions, such as supporting channelization and customizing the framer header information. By modifying the 64B/66B codec, the overhead during the data transmission process is reduced to the maximum extent, the transmission efficiency is improved, and the number of serial channels is reduced. As the configuration of a variety of rates and multiple serial channels can be supported, it can be flexibly applied to a variety of transmission interfaces of chip interconnection.

Fig. 5 is a schematic diagram of a structure of a MAC data frame according to an embodiment of the present disclosure. As shown in Fig. 5, in the embodiments of the present disclosure, it is required to modify the frame format of the MAC data frame at the link layer. In the frame format of Ethernet MAC, Preamble and SFD are fixed 8 bytes, which are start identification for locating the frame, and do not contain valid payload information. In the embodiments of the present disclosure, the Preamble and SFD are simplified, and the Preamble and SFD are replaced by one start identification for identifying a start position of the frame. FCS check is to complete the verification of the entire two-layer data frame. In the entire framer data transmission process, the 64B/66B encoding in the physical layer under the link layer has a certain error correction function, and most of the protocols in the network layer, the transport layer and the application layer above the link layer have corresponding verification methods. Therefore, according to the actual serial channel signal integrity, FCS check is optional, or less than 4 bytes of FCS check is adopted, so as to improve transmission efficiency. After simplification, the MAC data frame of the embodiments of the present disclosure includes the following parts:
a start identification, which is 1-8 bytes; if the start identification is 8 bytes, the MAC data frame is standard Preamble and SFD, which is the same as the existing MAC data frame; and if the start identification is 1 byte, there is only one *Start* byte, indicating the beginning of the framer;
framer header (Header) information, which is optional, and its length and format are configured according to different protocols and applications; the length is fixed or is variable, and information, such as a channel number, a priority, a protocol type, an operation type, flow table information and in-band flow control, may be carried;
optimized packet data (Optimize Packet Data), which is used for transmitting data framer content, some protocols may be optimized, for example, *Address* and *Control* fields of a PPP framer may be reduced in the PPP protocol; and
FCS frame check, which is optional, and its length may be 0-4 bytes; when it is 4 bytes, which is the FCS check in the 802.3 specification; and if it is 0 byte, there is no the FCS frame check.

By simplifying the standard MAC data frame format, the embodiments of the present disclosure can support channelization and customized header information, thereby improving the transmission efficiency.

In the embodiments of the present disclosure, the interframe gap (IPG) is also reduced while encoding in the physical coding sublayer (PCS, Physical Coding Sublayer) of the physical layer. According to the IEEE 802.3 specification, the IPG is filled between the adjacent two MAC data, and in line speed, an average of 12 bytes of the IPG with the variable range of 9-15 bytes is achieved based on the DIC algorithm. In the embodiments of the present disclosure, in order to improve the transmission efficiency of the framer, in the case that 64B/66B encoding is compatible, the IPG is reduced to an average of 8 bytes with the variable range of 5 to 11 bytes.

Also, in the embodiments of the present disclosure, by adding three groups of 64B/66B codes, the IPG can be reduced to an average of 4 bytes with the variable range of 1 to 7 bytes.

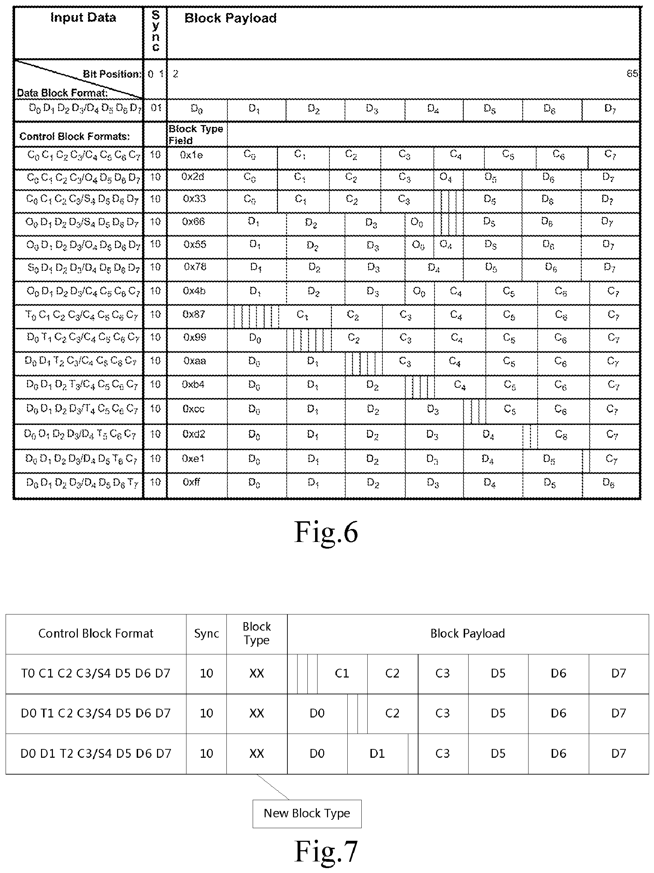

The standard 64B/66B code table is shown in Fig. 6. It can be seen from the code table, because in the Ethernet specification, the *Stars* control word is required to be aligned to lane0 or lane4, *Start* only appears at two positions, i.e., S0 and S4. *Terminal* may appear at any position, that is, any one of T0-T7. As the IPG range is 9-15 in the standard MAC frame format, there is no condition in which *Stars* and *Terminal* are in the same Control Block. However, in the embodiments of the present disclosure, if it is needed to support IPG = 4 bytes, the variable range of IPG is 1 to 7 bytes, in this case, there might be the condition in which *Stars* and *Terminal* appear in the same control block. In order to avoid this problem, it is possible to add the following three groups of control block code (Control Block) in the 64B/66B code table:
T0 C1 C2 C3 /S4 D5 D6 D7;
D0 T1 C2 C3/S4 D5 D6 D7; and
D0 D1 T2 C3/S4 D5 D6 D7.

The encoding format is shown in Fig. 7. By newly adding the 64B/66B control block code (Control Block), the interframe gap can be reduced to an average of 4 bytes, thereby further improving the data transmission efficiency of the embodiments of the present disclosure.

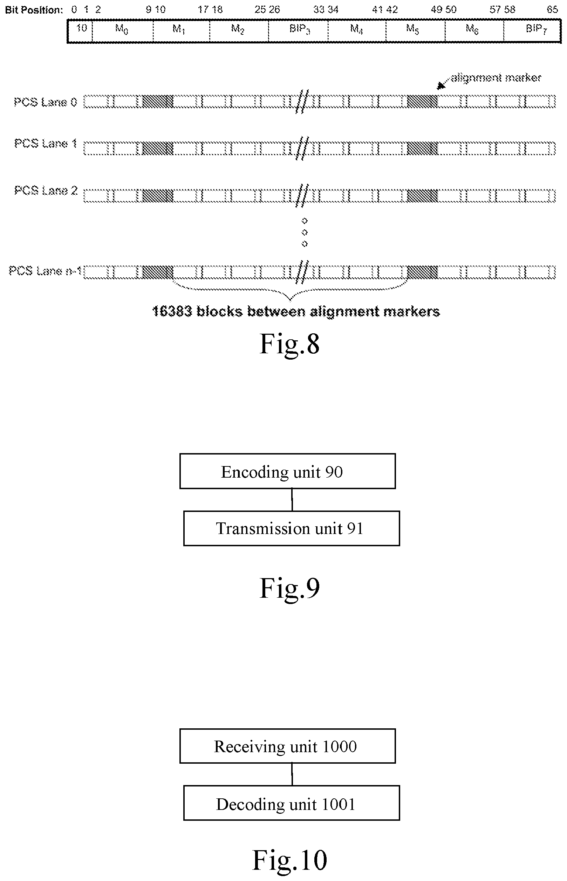

The embodiments of the present disclosure also can flexibly support serial channel bandwidth and serial channel number configuration. In practical applications, in order to transmit data with a variety of different bandwidths, it is possible to configure different serial channel rates, and it is also possible to configure multiple serial channels for data transmission. In order to support multiple channels of data transmission, by inserting alignment markers at the sending side periodically, at the receiving side, the respective channels can be aligned according to the alignment markers. The alignment marker (Alignment Marker) is introduced in the IEEE 802.3ba specification, and is used for ranking multiple serial channels of 40G/100G Ethernet, aligning at the receiving side and performing BIP check of PCS layer. Its format is shown in Fig. 8. In the embodiments of the present disclosure, since the interconnection interface is inside the system, it is not necessary to rank the serial channels for simplification of the design, and the alignment marker is only for the alignment at the receiving side and the BIP check. By calculating the BIP check of PCS code of this channel, the error code status of the serial channel can be monitored in real time.

For a single serial channel, multi-channel alignment is not required at the receiving side. In order to improve the transmission efficiency, the alignment marker (Alignment Marker) is inserted as an option.

Through the above implementation mechanism, with respect to the protocol interfaces such as 10G XFI/SFI, HiGig and Interlaken, the technical schemes of the embodiments of the present disclosure optimize the frame format, support the channelization and the customized framer header information, and may be applied to applications aggregated with multi-port. For example, after 10 GE ports are aggregated in the physical layer, data are sent to a packet processor chip for service processing through a 10.3125G serial channel. In order to carry the framer header information to the framer processing chip, the technical scheme of the embodiments of the present disclosure may be used to reduce the overhead in the data transmission process and improve the data transmission efficiency while maintaining the number of serial channels to be constant. For example, for a single port 10G POS interface, in 10G XFI/SFI, HiGig or Interlaken interface, two or more serial channels are needed for line speed transmission; according to the technical scheme of the present disclosure, through customizing the framer header format and optimizing the framer content, 10G POS can be transmitted on one piece of serial channel of 10.3125G rate, and more than 40 bytes of line speed requirement is achieved. In addition, because it can support configuration of a variety of rates and multiple channels, it can also be widely used in a variety of transmission interfaces of chip interconnection.

Fig. 9 is a schematic diagram showing a structure of a device for transmitting serial data according to an embodiment of the present disclosure. As shown in Fig. 9, the device for transmitting serial data of the present example includes an encoding unit 90 and a transmission unit 91.

The encoding unit 90 is configured to encode and pack data stream to be transmitted into a media access control MAC data frame.

In the embodiments of the present disclosure, it is necessary to modify the existing MAC data frame so as to carry only a small amount of control information, such that the MAC data frame carries more valid data. The MAC data frame may include only a start identification portion and a to-be-transmitted data portion.

As an implementation manner, the MAC data frame may further include a preamble (Preamble) portion, and/or a framer header (Header) portion, and/or a frame check sequence (FCS, Frame Check Sequence) portion.

In the embodiments of the present disclosure, a bit length of the start identification portion is 1 to 8 bytes; and when the bit length of the start identification portion is 1 or more, the start identification portion includes the preamble portion.

In the embodiments of the present disclosure, when the MAC data frame further includes the framer header (Header) portion, the framer header portion may include at least one information of a channel number, a priority, a protocol type, an operation type, flow table information, and an in-band flow control of a framer.

The frame check sequence portion has a bit length of 1 to 4 bytes when the MAC data frame also includes the frame check sequence FCS portion.

The transmission unit 91 is configured to transmit the encoded MAC data frame via a physical port and form an interframe gap after each of the transmitted MAC data frames so that the currently transmitted MAC data frame is spaced apart from a next MAC data frame to be transmitted by a set threshold bit.

In the embodiments of the present disclosure, the encoding mode of encoding the data stream to be transmitted by the encoding unit 90 is 64B/66B encoding mode.

When the interframe gap is 1 to 4 bytes, the following three groups of control block codes are added to the 64B/66B encoding mode:
T0 C1 C2 C3/S4 D5 D6 D7;
D0 T1 C2 C3/S4 D5 D6 D7; and
D0 D1 T2 C3/S4 D5 D6 D7.

The transmission unit 91 is further configured to insert an alignment marker in the interframe gap when transmitting two or more MAC data frames, so as to distinguish different MAC data frames by the alignment marker.

It should be understood by those skilled in the art that the functions of individual processing units in the device for transmitting serial data of the embodiments of the present disclosure can be understood by referring to the relevant description of the method for transmitting serial data of the foregoing embodiments. The individual processing units in the device for transmitting serial data of the embodiments of the present disclosure may be realized by an analog circuit which implements the functions described in the embodiments of the present disclosure, or by the operation of the software for performing the functions described in the embodiments of the present disclosure on a smart device.

Fig. 10 is a schematic diagram showing a structure of a device for receiving serial data according to an embodiment of the present disclosure. As shown in Fig. 10, the device for receiving serial data of the present example includes a receiving unit 1000 and a decoding unit 1001.

The receiving unit 1000 is configured to receive a MAC data frame.

The decoding unit 1001 is configured to decode the received MAC data frame, and parse out data in the MAC data frame by a start identification and an interframe gap of the MAC data frame.

The receiving unit 1000 is also configured to identify different MAC data frames by an alignment marker between the MAC data frames when the received MAC data frame is two or more.

In the embodiments of the present disclosure, corresponding to the encoding mode of 64B/66B coding mode in the above-mentioned method for transmitting data, the decoding mode is 64B/66B decoding mode.

When the MAC data frame carries other control information portion, a corresponding decoding process is required. Since the decoding process and the aforementioned encoding process are reverse to each other, the details of the decoding are not repeated here.

Those skilled in the art will appreciate that functions of individual processing units in the device for receiving serial data in the embodiments of the present disclosure may be understood with reference to the related description of the method for receiving serial data of the above-mentioned embodiments. The individual processing units in the device for receiving serial data of the embodiments of the present disclosure may be realized by an analog circuit which implements the functions described in the embodiments of the present disclosure, or by the operation of software which implements the functions described in the embodiments of the present disclosure on a smart device.

The embodiments of the present disclosure also record a storage medium, the storage medium storing computer program that is configured to perform the method for transmitting serial data of the above-mentioned individual embodiments.

The embodiments of the present disclosure also record a storage medium, the storage medium storing computer program that is configured to perform the method for receiving serial data of the above-mentioned individual embodiments.

In several embodiments provided by the present disclosure, it should be understood that the disclosed methods and smart devices may be implemented in other ways. The device embodiments described above are merely illustrative, for example, the division of the units is only a logical function division, and during the actual implementation, other division manners may be adopted, for example, multiple units or components may be combined, or may be integrated into another system, or some features may be ignored or not executed. In addition, the shown or discussed coupling or direct coupling or a communication connection between individual components may be either an indirect coupling or a communication connection through a number of interfaces, devices or units, which may be electrical, mechanical, or the like.

The unit described above as a separating component may or may not be physically separated. The component displayed as a unit may or may not be a physical unit, i.e., may be located in one place or may be distributed over a plurality of network elements. The part or all of the units may be selected according to the actual needs to achieve the purpose of the scheme of the present embodiment.

In addition, each of the functional units in the embodiments of the present disclosure may be all integrated in one processing unit, or each unit may be used as one unit separately, or two or more units may be integrated in one unit. The above integrated unit may not only be realized by adopting the hardware form, but also may be realized by adopting hardware and software functional units.

It will be understood by those of ordinary skill in the art that all or a portion of the steps for implementing the method embodiments described above may be accomplished by hardware related to application instructions. The above application may be stored in a computer-readable storage medium. When being executed, the application performs the steps including the method embodiment described above. The aforementioned storage medium includes various media that can store the application code, such as a mobile storage device, a read-only memory (ROM), a random access memory (RAM), a disk, or an optical disk.

Alternatively, the integrated unit of the embodiments of the present disclosure may be stored in a computer-readable storage medium if it is implemented in the form of a software function module and is sold or used as a standalone product. Based on this understanding, the technical solutions of the embodiments of the present disclosure, in essence, or in the form of a contribution to the prior art, may be embodied in the form of a software product stored in a storage medium including a number of instructions such that a computer device (which may be a personal computer, a server, or a network device, etc.) performs all or part of the method described in the various embodiments of the present disclosure. The foregoing storage medium includes various media that can store application codes, such as a mobile storage device, a read-only memory (ROM), a random access memory (RAM), a magnetic disk, or an optical disk.

The above described contents are only the specific embodiments of the present disclosure, and the scope of the present disclosure is not limited thereto. Variations or substitutions which would be easily thought of by any person skilled in the art within the technical scope of the present disclosure should be covered within the scope of the present disclosure.

### Industrial Applicability

The present disclosure modifies the MAC data frame to only carry the start identification information and the data to be transmitted, such that the capability of carrying valid data by the MAC data frame is increased greatly; in addition, the present disclosure modifies the 64B/66B coding mode to make the interframe gap reach 1 byte, such that the overhead during data transmission is reduced to the maximum extent, the transmission efficiency is improved, and the number of serial channels is reduced.

## Claims

1. A method for transmitting high-speed serial data, comprising:
encoding data stream to be transmitted into a media access control MAC data frame; the MAC data frame comprising a start identification portion and a to-be-transmitted data portion; and
transmitting the encoded MAC data frame via a physical port and forming an interframe gap after each of the transmitted MAC data frames so that the currently transmitted MAC data frame is spaced from a next MAC data frame to be transmitted by a set threshold bit.

2. The method of claim 1, wherein the MAC data frame further comprises: a preamble portion, and/or a framer header portion, and/or a frame check sequence portion.

3. The method of claim 2, wherein a bit length of the start identification portion is 1 to 8 bytes; and when the bit length of the start identification portion is 2 or more, the start identification portion comprises the preamble portion.

4. The method of claim 2, wherein the framer header portion comprises at least one information of a channel number, a priority, a protocol type, an operation type, flow table information, and an in-band flow control of a framer; and
the frame check sequence portion has a bit length of 1 to 4 bytes.

5. The method of any one of claims 1 to 4, wherein the interframe gap is from 1 to 7 bytes.

6. The method of claim 5, wherein an encoding mode for encoding the data stream to be transmitted is 64B/66B encoding mode; and
when the interframe gap is 1 to 4 bytes, three groups of control block codes are added into the 64B/66B encoding mode:
T0 C1 C2 C3/S4 D5 D6 D7;
D0 T1 C2 C3/S4 D5 D6 D7; and
D0 D1 T2 C3/S4 D5 D6 D7.

7. The method of claim 5, further comprising:
when serial channels for transmitting the data stream is two or more, further inserting an alignment marker in the interframe gap, then different serial channels are distinguished by the alignment marker.

8. A method for receiving serial data, comprising:
after receiving a MAC data frame, decoding the received MAC data frame, and parsing out data in the MAC data frame by a start identification and an interframe gap of the MAC data frame.

9. The method of claim 8, further comprising:
when the received MAC data frame is two or more, identifying previous and subsequent MAC data frames by an alignment marker between the MAC data frames.

10. A device for transmitting serial data, comprising: an encoding unit and a transmission unit, wherein:
the encoding unit is configured to encode data stream to be transmitted into a media access control MAC data frame; the MAC data frame comprising a start identification portion and a to-be-transmitted data portion; and
the transmission unit is configured to transmit the encoded MAC data frame via a physical port and form an interframe gap after each of the transmitted MAC data frames so that the currently transmitted MAC data frame is spaced from a next MAC data frame to be transmitted by a set threshold bit.

11. The device of claim 10, wherein the MAC data frame further comprises: a preamble portion, and/or a framer header portion, and/or a frame check sequence portion; and
a bit length of the start identification portion is 1 to 8 bytes; and when the bit length of the start identification portion is 2 or more, the start identification portion comprises the preamble portion.

12. The device of claim 11, wherein the framer header portion comprises at least one information of a channel number, a priority, a protocol type, an operation type, flow table information, and an in-band flow control of a framer; and
the frame check sequence portion has a bit length of 1 to 4 bytes.

13. The device of any one of claims 10 to 12, wherein an encoding mode for encoding the data stream to be transmitted is 64B/66B encoding mode; and
when the interframe gap is 1 to 4 bytes, three groups of control block codes are added into the 64B/66B encoding mode:
T0 C1 C2 C3/S4 D5 D6 D7;
D0 T1 C2 C3/S4 D5 D6 D7; and
D0 D1 T2 C3/S4 D5 D6 D7.

14. The device of any one of claims 10 to 12, wherein the transmission unit is further configured to, when the transmitted MAC data frame is two or more, insert an alignment marker in the interframe gap, then different MAC data frames are distinguished by the alignment marker.

15. A device for receiving serial data, comprising: a receiving unit and a decoding unit, wherein:
the receiving unit is configured to receive a MAC data frame; and
the decoding unit is configured to decode the received MAC data frame, and parse out data in the MAC data frame by a start identification and an interframe gap of the MAC data frame.

16. The device of claim 15, wherein the receiving unit is further configured to, when the received MAC data frame is two or more, identify different MAC data frames by an alignment marker between the MAC data frames.

17. A storage medium, the storage medium storing computer program that is configured to perform the method for transmitting high-speed serial data of any of claims 1-7.

18. A storage medium, the storage medium storing computer program that is configured to perform the method for receiving serial data of claim 8 or 9.
